# EUROPEAN PATENT SPECIFICATION

(11) **EP 3 962 763 B1**
(45) Date of publication and mention of the grant of the patent: **01.03.2023**
(21) Application number: 20723502.9
(22) Date of filing: 27.04.2020
(51) Int. Cl.: B60K 26/02

(54) **ADJUSTABLE THROTTLE PEDAL ASSEMBLY**
EINSTELLBARE GASPEDALANORDNUNG
ENSEMBLE ACCÉLÉRATEUR RÉGLABLE

(30) Priority: 02.05.2019 GB 201906188
(43) Date of publication of application: 09.03.2022
(73) Proprietor: Bentley Motors Limited, Crewe, Cheshire CW1 3PL (GB)
(72) Inventor: Ó MEACHAIR, Deaglán, Nantwich CW5 7DR (GB); ELLIOT, Gary Stephen, Whitchurch Shropshire SY13 1TE (GB)
(74) Representative: Wilson Gunn
(86) International application number: PCT/GB2020/051024
(87) International publication number: WO 2020/221991

(56) References cited:
- EP-A1- 2 529 970
- DE-A1-102012 217 854
- JP-A- 2006 281 796
- US-A1- 2016 004 271

## Description

### Technical Field of the Invention

The present invention relates to a throttle pedal (also known as an accelerator or gas pedal), and in particular but not exclusively, the invention relates to an adjustable throttle pedal assembly for automobiles.

### Background to the Invention

Throttle pedal assemblies with a non-uniform response are known.

The most common example of a throttle pedal assembly with a non-uniform response force is the "kick-down" response, familiar in many vehicles with automatic transmissions (referred to as "automatic vehicles"). These systems use a force indent (with a greater response force) after the 100% throttle position, which, when pressed causes a down-shift to allow greater acceleration. This is perceived by the driver as a foot-operated non-latching switch and is frequently provided by a separate switch (comprising a spring to increase the response force), which is pressed by the underside of the throttle pedal.

Another modification to provide an increased force under certain conditions has been proposed in an earlier patent application by the present applicant - WO2017/220981 proposes a "Virtual Footrest" apparatus, in which a deployable element comprising a sprung casing which is deployable to a position beneath the throttle pedal, to support the pedal such that it acts as a footrest in cruise control mode. The spring allows the throttle pedal to be depressed even when the element is deployed, but increases the response force, so that it can act as a footrest.

EP2529970A1 discloses a throttle pedal assembly which is operable to increase the pedal effort required to depress a throttle for a predetermined time period in response to the opening angle of the throttle pedal being above a threshold value. The threshold value is related to the fuel consumption of the vehicle, in order to increase fuel efficiency by discouraging the driver from depressing the throttle pedal in certain situations.

Bosch (RTM) have also proposed an "active pedal", which provides a haptic signal in the form of a gentle vibration, to alert a driver of a vehicle with a hybrid transmission when the combustion engine is about to take over from the electric motor, so they can reduce pressure on the throttle pedal and remain in the electric mode.

The present invention seeks to provide an improved throttle pedal assembly.

### Summary of the Invention

According to a first aspect of the invention there is provided an adjustable throttle pedal assembly, the adjustable throttle pedal assembly comprising a depressible throttle pedal, biased away from the depressed position, towards a rest position, and an electromagnetic brake, operable to adjust the force required to depress the throttle pedal, wherein the electromagnetic brake is adjustable to provide different customisable "pedal-weight" settings, to suit a driver's preferred force feedback.

The provision of an electromagnetic brake can add a retarding force to the throttle pedal, increasing the force required to depress the throttle pedal. The retarding force can be very versatile in terms of the haptic feedback and force/travel relationship created, and instantaneous in its response. This can be useful in providing a number of functions as discussed above, and more. Importantly, whilst the electromagnetic brake could provide one of the functions discussed, it could also serve multiple functions, thus reducing parts-count / inventory.

In particular, the electromagnetic brake may provide an increased force so as to act as a "virtual footrest" as discussed above.

Alternatively/additionally, for use in an automatic vehicle, the electromagnetic brake may provide an increased force so as to act as a "virtual kick-down switch", i.e. providing a perceivable increase of force at a particular point, at which point the automatic transmission will down-shift.

Alternatively/additionally, for use in a hybrid vehicle, the electromagnetic brake may provide an "ICE force-indent", i.e. an increased force at the point which the vehicle will need to start the internal combustion engine (ICE), or a predetermined pedal-travel distance before the vehicle will need to start the internal combustion engine.

The electromagnetic brake is adjustable to provide different customisable "pedal-weight" settings, to suit a driver's preferred force feedback, i.e. harder/easier to depress overall (regardless of whether it is harder to depress at certain points (e.g. kick-down, engaging ICE and/or in "virtual footrest" mode)).

The adjustability to provide customisable "pedal weight" settings, may be between discrete pedal weight settings, e.g. light, medium and firm, with a greater retarding force provided by the electromagnetic brake in to provide a firmer ("heavier") weight, or could be calibrated to a given driver. For example, drivers with smaller feet/legs may prefer a lighter weight (i.e. less force required to depress the pedal) and those with larger feet/legs may prefer a heavier weight (greater force required to depress the pedal).

The electromagnetic brake may comprise a rotatable friction plate coupled to the throttle pedal and a static electromagnet coupled to a mount, whereby increasing the voltage applied to the electromagnet increases the attraction between the friction plate and the mount, and hence increases the force required to depress the throttle pedal. Or, *vice versa,* the friction plate may be coupled to the mount and the electromagnet may be coupled to the throttle pedal, with increased voltage increasing the attraction between the friction plate and the throttle pedal, and hence increasing the force required to depress the throttle pedal. The friction plate may be formed from a material which is magnetic but does not retain magnetism after being in contact with a magnet, for example pure iron.

One portion of the electromagnetic brake, for example, the friction plate, may be mounted so as to be rotatable in one direction, such that the electromagnetic brake does not affect the force of the bias away from the depressed position. The mounting may be by means of a one-way coupling, such as a "sprag clutch", to which the friction plate may be attached. This feature is useful from a safety point of view, as it means that whilst the force required to depress the throttle can be increased as desired, the ordinary biasing force (for example of a spring) that moves the throttle pedal back to the (undepressed) rest position will always be sufficient, regardless of the state of the electromagnetic brake, preventing/restricting unintended vehicle acceleration and ensuring that when the pedal is released, the vehicle will behave in the normal fashion (i.e. normally decelerating), so that despite the addition of the functions of the electromagnetic clutch, there will be a level of familiarity and reassurance to the manner of its function.

The rotatable friction plate may be separated from the static electromagnet by an air gap. This can avoid the electromagnetic brake affecting the force required to depress the pedal when it is de-energised.

The electromagnetic brake may be selected such that it has a maximum retarding force (i.e. the force against depression of the pedal) of less than a predetermined safety threshold. The safety threshold may, for example, be no more than 5 times, no more than 3 times, or no more than twice the normal biasing force of the pedal when the brake is inactive. The provision of a safety threshold can help avoid the force required to depress the pedal being too high - e.g. so high that the pedal is in effect locked, with the driver unable to press it, or for example unable to press through a "force indent" provided by the "virtual kick-down switch", "virtual footrest" and/or "ICE force indent".

The throttle pedal assembly may comprise a pedal-travel sensor. The pedal travel sensor may be insensitive to electromagnetic interference - for example, it could be an optical sensor, or, it could be sufficiently remote from the electromagnet of the electromagnetic brake that the electromagnet does not cause inaccurate measurement.

The throttle pedal assembly may comprise a controller. The controller may be mounted to the mount, or may be a module of one of another on-board computer, many of which are found in modern vehicles.

The controller may be operable to output signals to the electromagnetic brake. The output signals may be an output voltage selected so as to adjust the force required to depress the pedal.

The controller may be operable to receive input signals and to select the output voltage in dependence on the input signals.

The input signals may comprise inputs from the pedal-travel sensor. These inputs can determine the point of travel of the pedal, which can be used to determine the necessary feedback to provide the appropriate "force indents" discussed above

The input signals may be provided by user-selectable inputs, for example a HMI, such as a simple button or a touch-screen and may be an indication of desired pedal weight, whereby a higher output voltage will be provided for a heavier pedal weight signal.

Alternatively/additionally, the controller may be capable of running a calibration setting, saving the result to memory and using the memorised result as an input, upon which the output voltage depends.

For example, to calibrate the pedal, in response to a signal (e.g. from an HMI) to enter a calibration sequence, the controller may apply maximum resistive force (i.e. maximum effective voltage) to the electromagnetic brake (and optionally may instruct the driver to rest his/her foot on the pedal and optionally instruct the driver to relax the leg as if using a foot rest); the controller may then gradually reduce the resistive force, and monitor the pedal travel sensor, until the pedal begins to move, so as to determine the minimum amount of force required to balance the foot-force and prevent movement; the controller may use this minimum amount of force to select a customised pedal-weight setting, i.e. the optimum force to apply against depression of the pedal.

The output voltage may be based on customised pedal weight setting and variable depending on other inputs (e.g. data relevant to operation of the "virtual kick-down switch", "virtual footrest" and/or "ICE force indent", such that the force can be increased as necessary to provide those (or any other) haptic responses).

The minimum amount of force may be saved as a personal setting, optionally with other settings, such as seat settings, optionally selected in a similar manner, for example by pressing a memory button on the seat to select the correct calibration for the specific driver, or alternatively coded to a particular key.

In an alternative, the pedal weight could be set in dependence on seat position (the controller receiving a signal indicative of the position of the seat) - seat position is generally correlated with the driver's height, which typically correlates with their weight and size of foot, so this could be used as a rough gauge of ideal resistive force requirements (with a seat position indicative of a smaller driver resulting in a lower resistive force, i.e. a "lighter" pedal). Of course, this is likely to be less accurate than a calibration, and possibly less to a driver's personal taste than a selectable setting. However, it avoids the need to go through a "setup", which can be undesirable, whilst still providing a weight that is more likely to suit the driver than the "one size fits all" approach that is typical in the car-industry today, with a fixed force/travel relationship for all vehicles in a model range, which is based largely on the force of the bias (e.g. a biasing spring) and not customisable at all.

Where the adjustable throttle pedal assembly is operable to provide an increased force so as to act as a "virtual footrest", the controller may be operable, upon receiving an input indicating selection of a virtual footrest mode, to apply a first predetermined force, above the normal force in normal driving mode, so as to remain in a footrest position, supporting the foot, then on receiving an input (e.g. from the throttle pedal travel sensor) indicating that the pedal has been depressed beyond the footrest position (or beyond a threshold amount beyond the footrest position), to gradually, over a predetermined time period, reduce the resistive force to a normal level. This can avoid excessive throttle pedal travel, if the force was immediately switched off, or rapidly decreased and avoid the response being uncomfortably heavy, if it continued to apply the same resistive force throughout the pedal travel range. Of course, the "normal" level may be zero, or may be dependent on a pedal weight setting and other factors, such as kick-down or ICE force indent.

Having returned to normal operation, if the controller does not receive an input indicating that the virtual footrest has been cancelled, upon reaching the rest position, the controller may re-apply the first predetermined force, so as to act as a footrest once again. The controller may also gradually reduce the resistive force to a normal level over a predetermined time period, in response to an input signal indicating that the virtual footrest mode has been deactivated (including for example a signal indicating that cruise control, or autonomous driving mode has been deactivated).

The throttle pedal assembly may comprise a pendulum-mounted throttle pedal, i.e. a throttle pedal that is mounted at the top, with a step plate below the mount.

The throttle pedal may be connected to the mount via an axle, for example by way of a plate portion, such as an annular plate portion of the throttle pedal distal from the step plate. The axle may be irrotatably attached to the throttle pedal, but rotatable with respect to the mount. The rotatable axle may be attached to the friction plate via the one-way bearing. The electromagnet may be irrotatably attached to the mount. This may allow the friction plate to rotate relative to the mount in one direction (when a depressive force is applied by a driver to the throttle pedal, such that if active, the electromagnetic brake applies a resistive force), but to rotate relative to the throttle pedal in the opposite direction (when returning under the force of the bias away from the depressed position), so that the electromagnetic brake does not affect recoil.

As an alternative to a pendulum mounted throttle pedal, the throttle pedal assembly may comprise a floor mounted throttle pedal (i.e. a pedal attached such that the mount is beneath the step-plate, beneath it, generally being pivotable from the front).

The throttle pedal assembly may comprise a linkage linking the step plate to the mount. The biasing member may be provided between the mount and the step plate, so as to act directly on the step plate, or between the mount and the linkage, so as to act on the linkage (which may optionally comprise a plurality of rotatably mounted links).

The linkage may be mounted to an axle, for example mounted eccentrically on a plate (such as a circular plate) fixed to an axle. The axle may rotate in the mount.

The axle may be irrotatably attached to the throttle pedal, but rotatable with respect to the mount. The rotatable axle may be attached to the friction plate via the one-way bearing. The electromagnet may be irrotatably attached to the mount. This may allow the friction plate to rotate relative to the mount in one direction (when a depressive force is applied by a driver to the throttle pedal, such that if active, the electromagnetic brake applies a resistive force), but to rotate relative to the throttle pedal in the opposite direction (when returning under the force of the bias away from the depressed position), so that the electromagnetic brake does not affect recoil.

The pedal travel sensor may comprise two portions, one mounted to the mount, the other mounted to throttle pedal, for example to the plate (i.e. the plate portion of a pendulum throttle pedal or the plate to which the linkage of a floor mounted throttle pedal is attached). Thus, relative movement between the two portions may be monitored by the controller to determine the extent of pedal travel.

The invention also extends to a vehicle comprising the throttle pedal assembly of the first aspect of the invention, optionally including any optional features or combination thereof. The vehicle may be an automobile. The vehicle may be a hybrid vehicle. The vehicle may have an automatic transmission. Alternatively the vehicle may have a manual transmission.

A second aspect of the invention comprises a throttle pedal controller operable to receive input signals and output an electromagnetic brake control signal, in dependence on the input signals; the electromagnetic brake control signal being an output voltage selected so as to adjust the force required to depress a throttle pedal. The controller may comprise any of the optional features set out in relation to the controller defined above.

### Detailed Description of the Invention

In order that the invention may be more clearly understood one or more embodiments thereof will now be described, by way of example only, with reference to the accompanying drawings, of which:
- Figure 1: shows a vehicle comprising a throttle pedal assembly;
- Figure 2: shows a schematic side view of a throttle pedal assembly according to a first embodiment of the invention;
- Figure 3: shows a cross section along the line A-A of figure 1;
- Figure 4: shows a schematic side view of a throttle pedal assembly according to a second embodiment of the invention;
- Figure 5: shows a cross section along the line A-A of figure 4;
- Figure 6: shows a schematic side view of a throttle pedal assembly according to a third embodiment of the invention;
- Figure 7: shows a cross section along the line A-A of figure 6;
- Figure 8: shows a diagram of the controller provided in the throttle pedal assemblies of figures 1-7 and its inputs/outputs; and
- Figure 9a: shows an enlarged schematic cross sectional view of the connection between the mounting plate and the friction plate of the throttle assembly of figures 2 and 3 with the electromagnet activated;
- Figure 9b: shows an enlarged schematic cross sectional view of the connection between the mounting plate and the friction plate of the throttle assembly of figures 2 and 3 with the electromagnet deactivated; and
- Figure 9c: show a diagrammatic view of the connection in figures 9a and 9b in particular showing the arrangement of the attachment points.

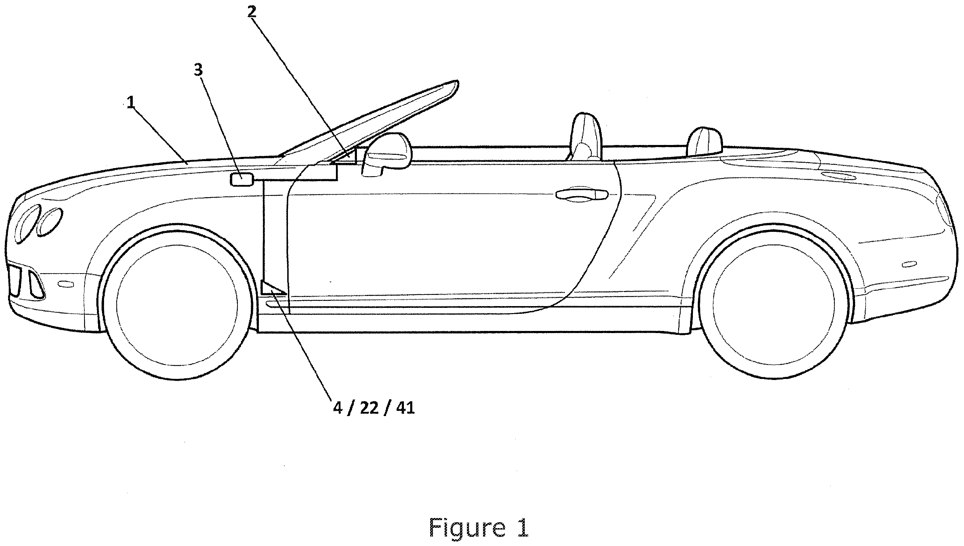

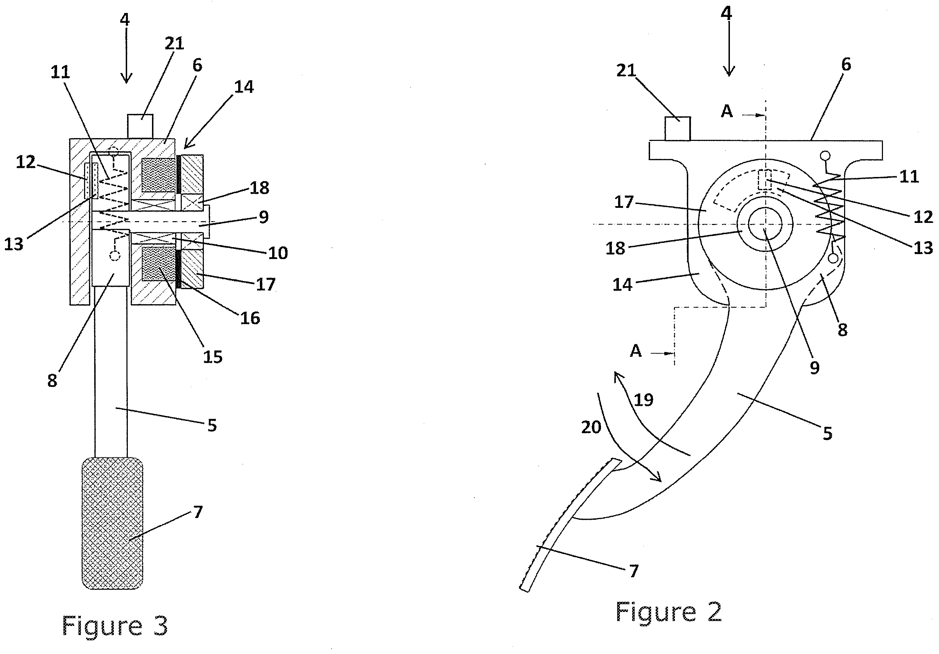

With reference to figure 1, a vehicle is shown. In this example, the vehicle is a hybrid automobile 1 having an automatic transmission. The vehicle 1 comprises a human machine interface 2, in the form of a touchscreen, which is able to act as a visual output device and also an input device to receive input signals from a driver. The HMI 2 is operably connected to an onboard computer 3 (which of course may be a plurality of control units, e.g. to control different aspects, such as the internal combustion engine and the electric motors in the hybrid vehicle 1). The HMI 2 and onboard computer 3 are each operably connected to a controller 21, in the form of a CPU equipped with memory and programmed to operate as described below. The controller 21 is provided in a throttle pedal assembly 4, 22, 41, which is of any one of the throttle pedal assemblies 4, 22, 41 described below with reference to figures 2-7.

The throttle pedal assembly 4 of the first embodiment of the invention is shown in figures 2 and 3. This throttle pedal assembly 4 comprises a pendulum throttle pedal 5, depending from, and rotatably mounted to, a mount 6. The mount, in turn, is fixed in any known fashion to the body of the vehicle 1 (shown in figure 1). As is conventional, the throttle pedal 5 comprises a step plate 7 at its proximal end, arranged so as to be depressed by a driver's foot. The distal end of the throttle pedal 5 is formed into a generally annular plate portion 8, with its central aperture irrotatably attached to an axle 9, which extends through the mount 6, supported by a plain bearing 10 for rotation with respect to the mount 6.

A biasing member 11 in the form of a compression spring extends between a portion of the pedal 5 (in this case a bulge from the plate portion 8) and a portion of the mount 6, so as to bias the throttle pedal 5, and in particular the step plate 7, towards a rest position.

The mount 6 is U-shaped, formed from first and second plate-like limbs connected by a web at the top (which in use is fixed to the body of the vehicle 1). The axle 9 extends through the first plate like limb (right hand side in figure 3). A pedal travel sensor is provided, and is made up of a first portion 12, for example an optical sensor portion provided on the inside surface of the second limb of the mount 6 (left hand side in figure 3), arranged to sense the position of a second portion 13 of the sensor, e.g. a marker portion, which is arranged on the plate portion 8 of the throttle pedal 5 opposite the first portion. Alternatively a Hall effect sensor could be used, for example a CIPOS^{®} sensor available from Hella^{®}

An electromagnetic brake 14 is provided on the side of the throttle pedal assembly 4 where the axle 9 extends. The electromagnetic brake 14 is provided by an electromagnet 15 and a friction plate 16. The electromagnet 15 of this embodiment is annular and is provided in the outside surface of the first limb (radially outwardly of the axle 9 and the plain bearing 10). The friction plate 16 is also annular and arranged facing, but separated by a small air gap from, the electromagnet 15.

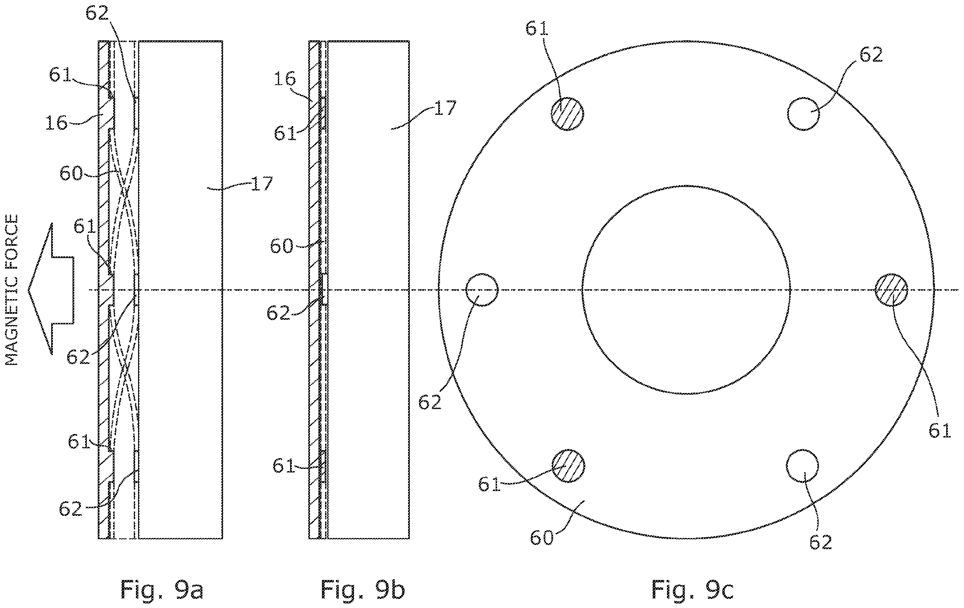

The friction plate 16 is mounted to the axle 9, to which the throttle pedal 5 is irrotatably attached. The friction plate 16 is mounted to a mounting plate 17, such that in the absence of an attractive force from the electromagnet, a spring shim 60 (shown in figures 9a-9c) holds the friction plate 16 against the mounting plate 17, separate from the electromagnet 15 (as shown in figure 9b). The mounting plate 17 is, in turn, irrotatably attached to the outer race of a one-way bearing, in the form of a sprag clutch 18. The inner race of the sprag clutch 18 is attached (irrotatably) to the axle 9. The sprag clutch 18 is arranged so as to allow free movement of axle 9 (and hence the throttle pedal 5) relative to the mounting plate 17 in a first direction 19 towards the rest position (to which the biasing member 11 biases the throttle pedal 5). On the other hand, the sprag clutch 18 is arranged to engage between the axle 9 and the mounting plate 17 when the throttle pedal 5 is depressed in the opposite direction 20, against the bias (by a driver's foot). Thus, when the throttle pedal 5 is depressed, the friction plate 16 rotates relative to the electromagnet 15, whereas when the throttle pedal is biased back to the rest position, the friction plate 16 is not caused to rotate relative to the electromagnet 15.

Figures 9a-9c show how the friction plate 16 is mounted to the mounting plate 17 by means of the spring shim 60. The spring shim 60 is attached at three equidistant friction plate attachment points 61 (120 degrees apart) to the friction plate 16 and at three mounting plate attachment points 62 equidistantly spaced between the friction plate attachment points (120 degrees from each other), such that the shim 60 to friction plate and mounting plate attachment points 61, 62 are offset by 60 degrees in order to provide rotational torque transmission between the friction plate 15 and the mounting plate 17 while allowing a small radial displacement by means of the spring shim 60 bending. When the electromagnet 15 is energised (as shown in figure 9a) it provides an attractive force to the friction plate 16 opposing the elastic force of the spring shim 60, to pull the friction plate 16 away from the mounting plate 17 across the air gap and against the electromagnet 15, such that the friction plate 16 bears against the electromagnet with a force proportional to the strength of the electromagnetic force. This friction between the friction plate 16 and the electromagnet 15 opposes rotation of the friction plate 16, thereby resisting rotation of the mounting plate 17 and hence the axle 9 to which the pedal 7 is attached. In consequence energising the electromagnet 15 increases the force required to depress the pedal 5, and the higher the voltage applied to the electromagnet 15, the greater the attractive force, and hence the greater the force required to overcome the force retarding depression of the pedal 5.

The throttle pedal assembly 4 further comprises a controller 21 shown schematically in figures 2 and 3, which controls the operation of the electromagnet 15 on the basis of various inputs. The general operation of the controller is the same regardless of the specific form of the throttle pedal assembly 4, so it will be described in detail below, following the description of two alternative embodiments of throttle pedal assemblies.

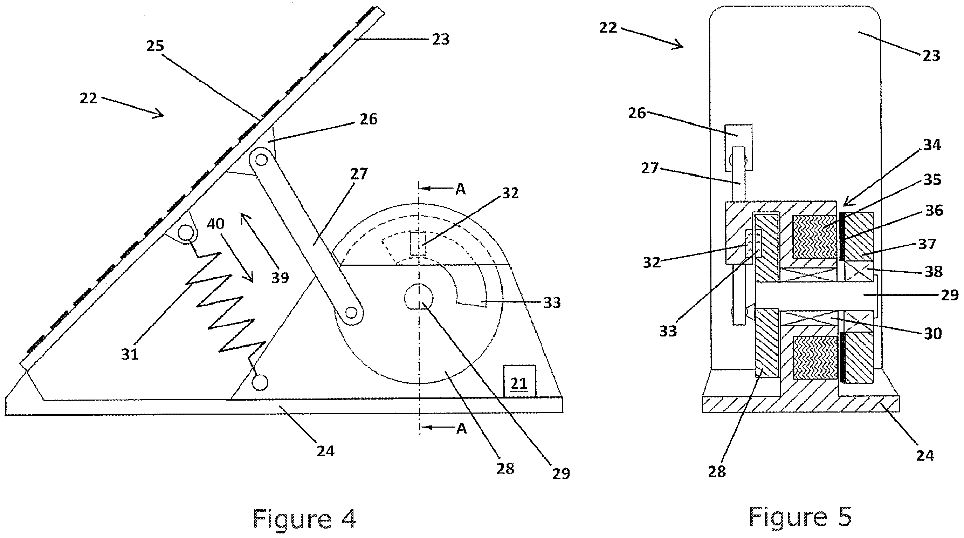

The throttle pedal assembly 22 of the second embodiment of the invention is shown in figures 4 and 5. This throttle pedal assembly 22 comprises a floor mounted or "organ stop" throttle pedal 23 pivotally mounted at its front (left hand side in figure 4) to a mount 24. The mount 24, in turn, is fixed in any known fashion to the body of the vehicle 1 (shown in figure 1). As is conventional, the throttle pedal 23 comprises a step plate 25, with an upwardly and forwardly facing surface to be depressed by a driver's foot. The underside of the throttle pedal 23 includes a bracket 26, to which one end of a linkage 27 in the form of an input rod is pivotably mounted. The opposite end of the linkage 27 is pivotably attached to a crank 28, which is a generally annular plate, with its central aperture irrotatably attached to an axle 29, which extends through the mount 24, supported by a plain bearing 30 for rotation with respect to the mount 24.

A biasing member 31 in the form of a compression spring extends between the underside of the pedal 23 (in this case a bracket thereon) and a portion of the mount 24, so as to bias the throttle pedal 23, and in particular the step plate 25, towards a rest position.

The mount 24 has a flat base for connection to the floor of the vehicle, with a generally triangular body extending therefrom. The axle 29 extends through the triangular body. A pedal travel sensor is provided, and again includes a first portion 32. This first portion 32 is provided on the inside surface of a hood extending from the top of the generally triangular body of the mount 6 over the top part of the crank 28 (left hand side in figure 5). It is arranged to sense the position of a second portion 33 of the sensor which is arranged on the opposing surface of the crank 28, towards its top.

As in the first embodiment, an electromagnetic brake 34 is provided on the side of the throttle pedal assembly 22 where the axle 29 extends. The electromagnetic brake 34 is provided by an electromagnet 35 and a friction plate 36. The electromagnet 35 is annular and is provided in the other side of the triangular body to the side on which the crank 28 and sensor 32, 33 is found (radially outwardly of the axle 29 and the plain bearing 30). The friction plate 36 is also annular, and is arranged facing, but separated by a small air gap from the electromagnet 35.

The friction plate 36 is mounted to the axle 29, to which the throttle pedal 23 is irrotatably attached. The friction plate 36 is mounted by means of a mounting plate 37, which is irrotatably attached to the outer race of a one-way bearing, in the form of a sprag clutch 38. (The friction plate 36 is mounted to the mounting plate 37 by means of a sping shim (not shown) in exactly the same manner as the first embodiment.) The inner race of the sprag clutch 38 is attached (irrotatably) to the axle 29. The sprag clutch 38 is arranged so as to allow free movement of axle 29 (and hence the throttle pedal 22) relative to the mounting plate 37 in a first direction 39 towards the rest position (to which the biasing member 31 biases the throttle pedal 23). On the other hand, the sprag clutch 38 is arranged to engage between the axle 29 and the mounting plate 37 when the throttle pedal 23 is depressed in the opposite direction 20, against the bias (by a driver's foot). Thus, when the throttle pedal 23 is depressed, the friction plate 36 rotates relative to the electromagnet 35, whereas when the throttle pedal is biased back to the rest position, the friction plate 36 is not caused to rotate relative to the electromagnet 35.

When the electromagnet 35 is energised it provides an attractive force to the friction plate 36 bringing it into frictional engagement with the electromagnet and thus resisting its rotation. In consequence energising the electromagnet 35 increases the force required to depress the pedal 23, and the higher the voltage applied to the electromagnet 35, the greater the attractive force, and hence the greater the force required to overcome the force retarding depression of the pedal 23.

The throttle pedal assembly 22 further comprises a controller 21 shown schematically in figure 4, which controls the operation of the electromagnet 35 on the basis of various inputs. The general operation of the controller is the same regardless of the specific form of the throttle pedal assembly 4, so it will be described in detail below, following the description of a third exemplary embodiment of a throttle pedal assembly.

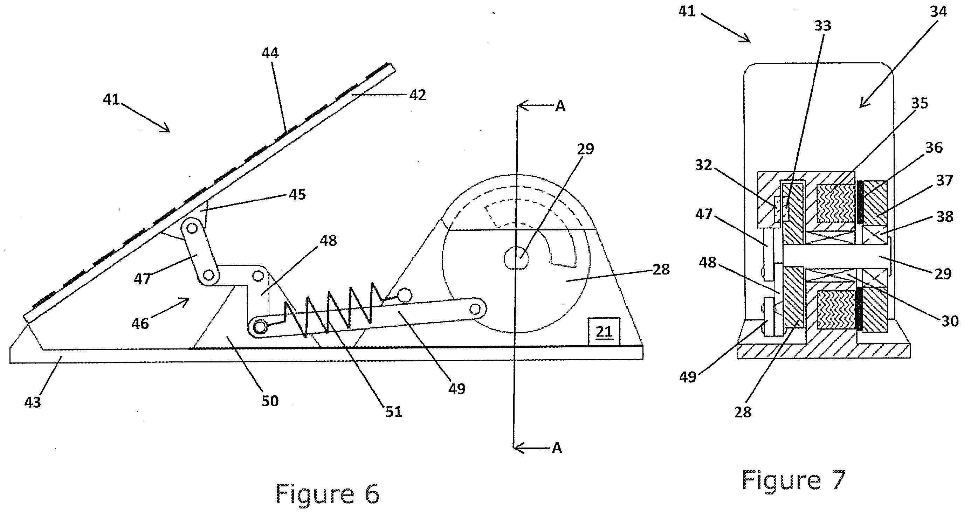

The throttle pedal assembly 41 of the third embodiment of the invention is shown in figures 6 and 7. Like the second embodiment, this throttle pedal assembly 41 comprises a floor mounted or "organ stop" throttle pedal 42 pivotally mounted at its front (left hand side in figure 6) to a mount 43. Many parts are the same as in the second embodiment and like numerals are used for like parts. The mount 43 is fixed in any known fashion to the body of the vehicle 1 (shown in figure 1). The throttle pedal 42 again comprises a step plate 44, with an upwardly and forwardly facing surface to be depressed by a driver's foot. The underside of the throttle pedal 42 includes a bracket 45, to which one end of a linkage 46 is pivotably mounted.

The main difference between the second and third embodiments is simply in the linkage, which in this third embodiment comprises a series of three links 47, 48, 49, the first link 47 being straight, pivotally connected at one end to the bracket 45 and pivotally connected at the opposite end to the second link 48; the second link being right-angled, pivotally connected at one end to the first link 47, as mentioned, pivotally connected at the opposite end to the third link 49, and, pivotally mounted at the corner, between the two ends, to an upwardly extending portion 50 of the mount 43, so as to translate downward pressure on the throttle pedal 42, and downward motion of the first link 47 into lateral motion of the third link 49. The opposite end of the third link 49 to that connected to the second link 48 is pivotably attached to a crank 28, which is a generally annular plate, with its central aperture irrotatably attached to an axle 29, which extends through the mount 43, supported by a plain bearing 30 for rotation with respect to the mount 24.

Another aspect of the third embodiment which differs from the second is that a biasing member 5 in the form of a compression spring extends between the linkage 46 and a portion of the mount 43, in particular, between a triangular body extending from the flat base of the mount 43 and the region where the second and third links are connected, so as to bias the throttle pedal 42, and in particular the step plate 44, towards a rest position.

As in the second embodiment, the mount 42 has a flat base for connection to the floor of the vehicle, with a generally triangular body extending therefrom. The axle 29 extends through the triangular body. A pedal travel sensor is provided, and again includes a first portion 32, which is provided on the inside surface of a hood extending from the top of the generally triangular body of the mount 42 over the top part of the crank 28 (left hand side in figure 7). It is arranged to sense the position of a second portion 33 of the sensor which is arranged on the opposing surface of the crank 28, towards its top.

Exactly as in the second embodiment, an electromagnetic brake 34 is provided on the side of the throttle pedal assembly 41 where the axle 29 extends. Like numbers refer to like parts in the figures, so this is described in no more detail here - we simply refer to the paragraphs above.

Like the other throttle pedal assemblies described, the throttle pedal assembly 41 of the third embodiment further comprises a controller 21 shown schematically in figure 6, which controls the operation of the electromagnet 35 on the basis of various inputs. The general operation of the controller is the same regardless of the specific form of the throttle pedal assembly 4 and described in detail below.

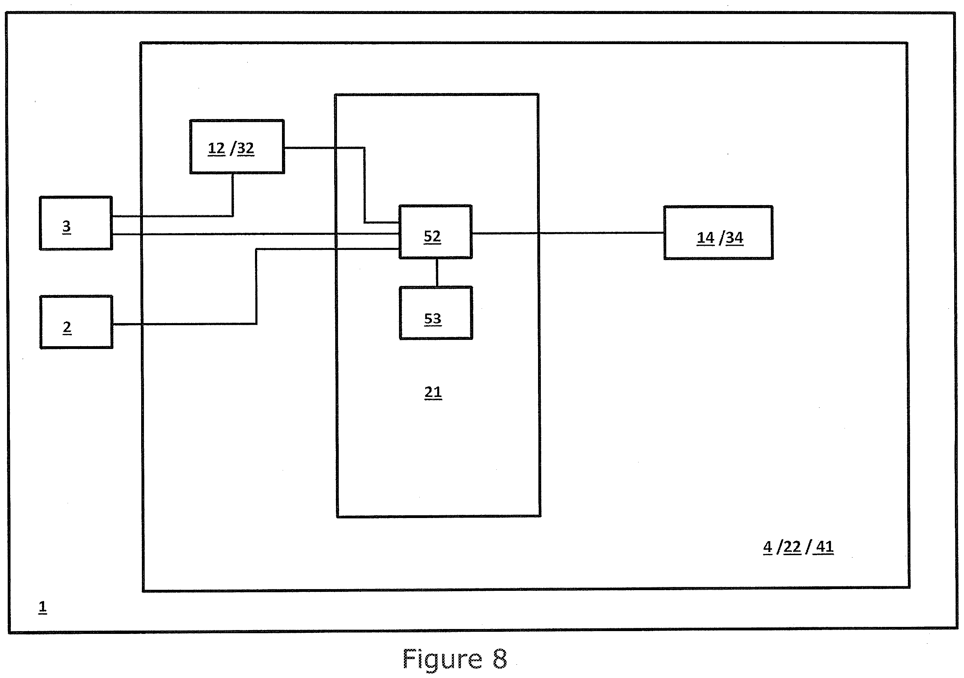

The operation of the controller 21 in the hybrid electric automatic automobile 1 of figure 1 and any of the first to third embodiments of throttle pedal assemblies 4, 22, 41 is described with reference to figure 8.

The controller 21 is a CPU comprising a processor 52 and memory 53, it receives a number of inputs and transmits certain outputs, primarily an electromagnetic brake control signal, in the form of a variable output voltage, which is outputted to the electromagnetic brake 14/34 of the throttle pedal assembly 4/22/41. The primary inputs are a throttle pedal position signal from the first portion 12/32 of the throttle pedal position sensor, a user input from the HMI 2 and an engine control input from the onboard computer 3.

The processor 52 of the controller 21 is programmable to operate in different manners depending on how it is setup, for example by the manufacturer in dependence on the characteristics of the vehicle that it is installed in. For example, if, rather than an automatic vehicle 1, the controller was installed in a manual vehicle, it would not need to perform a "kickdown" function. Similarly, in a vehicle without cruise control/autopilot or the like, it would not need to perform a "virtual footrest" function; in a vehicle with only an internal combustion engine, it would not need the "ICE indent" function. Likewise, manufacturers may choose to install a throttle pedal assembly 4, 21, 41 in all vehicles to reduce inventory, but to turn off certain features in certain vehicles (e.g. bottom of the range models), or to activate features as an option - thus, for example, the setup could determine whether pedal weight is customisable or not, or whether it is customisable by calibration, by choice between settings, in dependence on seat position, or each of these, depending on a choice made through the HMI 2.

For the sake of this description of an embodiment, the controller 21 is set up to have a customisable pedal weight, based on a choice made through the HMI 2, and to perform the kickdown, virtual footrest and ICE indent functions.

Starting with customisable pedal weight, the HMI 2 is capable of displaying a selectable "settings" menu on the (touch) screen. When selected, e.g. by touching the relevant area of the screen, a selectable "pedal weight" option is displayed. When selected, the "pedal weight" option displays three selectable options for pedal weight: "pre-set", "automatic", or "calibrated". Selecting "pre-set" provides three selectable options "light", "medium" and "firm".

When a user selects "light", a corresponding (i.e. "light") pedal weight signal is sent by the HMI 2 to the controller 21. The processor 52 interprets this signal to mean that no extra weight should be applied to the pedal to account for the desired pedal weight, so no additional voltage is applied to the electromagnetic brake control signal sent to the electromagnetic brake to correspond to the desired pedal weight. This "light" setting is saved to memory 53 and used unless overwritten by a different setting received from the HMI.

If, the user selects "medium", a corresponding pedal weight signal is sent to the processor 52 of the controller 21, saved to memory 53 and in consequence wherever the throttle pedal is positioned, the controller outputs an additional voltage as the electromagnetic brake signal to the electromagnetic brake 14/34 to provide a resistive force corresponding to an extra "medium" force, required to depress the pedal. The "medium" signal is saved to memory 53 and used unless overwritten.

In the event that "firm" is selected, the controller 21 receives this signal and outputs an additional voltage corresponding to a higher resistive force, hence further increasing the force required to depress the pedal. Again, this signal is saved and used unless overwritten.

If, rather than the "pre-set" option, a user selects "automatic", the controller receives this signal, determines the seat position from a seat position signal output from the onboard computer 3, in which all the way forward is "minimum" and all the way back is "maximum", and saves the position to memory. The position between minimum and maximum is taken to correspond to the amount of additional voltage to apply to the electromagnetic brake signal.

If, instead, the user selects "calibrated", the HMI 2 sends a calibration signal to the controller 21, which applies maximum resistive force via the output voltage to the electromagnet brake 14/34. The HMI 2 then outputs an instruction to the driver to rest his/her foot on the pedal and relax the leg as if using a foot rest. The output voltage to the electromagnetic brake 14/34 is then reduced gradually, whilst the controller 52 simultaneously monitors the throttle pedal position sensor 12/32 until it indicates that the pedal is starting to move. This tells the system how much force the driver applies without actually pushing on the pedal. This driver specific data would then be used to determine the optimum pedal weight setting, as well as set the optimum force characteristics for `kick down', 'active pedal', 'footrest', and any other features that employ the electromagnetic pedal haptic control system. An additional voltage corresponding to a force corresponding to that at which the pedal began to move can be added throughout pedal motion, with the driver specific setting being saved to memory 53, and the controller 52 outputting a signal to the HMI to display an indication that the pedal weight has been calibrated.

It will be noted above that an "additional" voltage is described in relation to the pedal weight options above. This additional voltage is output regardless of the position of the pedal. In this embodiment, the control signal further comprises a standard variable voltage to which the additional voltage (based on pedal weight) is added - the standard variable voltage varying based on further inputs and the mode of operation, as described below.

In an ordinary driving mode (not cruise control / autonomous driving etc.), the onboard computer 3 receives an indication of the throttle pedal position from the sensor 12/32 and controls the power to the vehicle 1 accordingly. At the top of the throttle pedal motion, nearest the rest position, since the vehicle is hybrid, providing there is sufficient battery power, the power is provided by the batteries, with the vehicle being propelled by motors. Under these conditions, the return force of the pedal (towards the rest position) is solely the result of the force of the biasing member 11, 31, 51 plus any additional voltage based on the pedal weight setting described above.

The onboard computer 3 continuously monitors the power required of the battery to assess when the ICE will need to be activated if more power is demanded by the user (by pressing further on the throttle pedal) - this can occur at varying throttle (hence pedal position) as a result of environmental and system parameters. Accordingly, the onboard computer 3 outputs a signal to the controller 21 when the pedal position is close to the maximum available throttle in "E" mode, say 5 degrees from triggering the ICE to start. On receipt of this "Max E Power" signal, the controller the electromagnetic brake output signal, increasing the standard variable voltage at this position and beyond (but gradually reducing the additional voltage over time to avoid discomfort), so as to provide an "ICE indent" to indicate to the driver that if he/she does not push past the associated throttle position, the vehicle can remain in "E" mode, which is normally more economical.

Beyond the throttle pedal position at which the ICE starts ("the ICE indent") the electromagnetic brake output signal remains normal (based on the additional voltage for pedal weight), to the point of 100% ICE throttle in the given gear chosen by the automatic gearbox. This can be a fixed position of the throttle pedal, corresponding to a fixed position sensed by the throttle pedal position sensor 12/32. The processor 51 of the controller 21 monitors when this position is reached and, to replicate the "kickdown" function, at this point (where continued pressing on the pedal will cause the automatic gearbox to downshift), and beyond to the full extend of pedal travel, the controller modifies the electromagnetic brake output signal, increasing the standard variable voltage output so that the total output voltage (including the additional voltage associated with pedal weight setting) is increased and hence the resistive force and force required to depress the pedal is increased, thereby replicating the kickdown function, alerting the driver that this continued pressing on the accelerator results in a downshift to provide more acceleration.

Finally, if (e.g. via the HMI 2) autonomous driving mode, or cruise control is selected, and the driver selects a "virtual footrest" mode, the throttle pedal must still be fully functional as a throttle pedal as is the case with existing cruise control functions. However, the controller 21 on receiving the virtual footrest mode signal will output a substantially increased standard variable voltage as the "footrest" electromagnetic brake signal, such that this voltage, plus any additional voltage from the pedal weight setting will hold the pedal in position to support the foot. Due to the increased pedal force that is required in order to provide the footrest function, the throttle pedal would be uncomfortably heavy if the electromagnetic brake 14/34 continued to apply the same braking force throughout the whole pedal travel range while in footrest mode. Accordingly, the processor 52 of the controller 21 continues to monitor the throttle pedal position sensor 12/32 and if a throttle pedal movement above a pre-determined threshold is detected while in footrest mode, then it is assumed that the driver wishes to accelerate the vehicle, in which case the footrest electromagnetic brake signal and corresponding substantially increased standard variable voltage will gradually reduce to zero in order to provide a transition to a normal pedal force / travel ratio, and hence provide a more comfortable throttle pedal function. If the electromagnetic brake force was simply switched off or reduced too quickly it would result in excessive throttle pedal travel and hence unwanted vehicle acceleration. The footrest mode is linked to the cruise control / autonomous driving mode and will remain 'switched on' until either the footrest mode, or corresponding cruise / autonomous driving mode is deactivated (which will be detected as a signal from the HMI 2 or onboard computer 3). If deactivation is not detected, once the controller 21 detects from the sensor 12/32 that the pedal as returned to the rest position, the increased standard variable voltage will be reapplied to reactivate the virtual footrest.

The above embodiments are described by way of example only. Many variations are possible without departing from the scope of the invention as defined in the appended claims.

## Claims

1. An adjustable throttle pedal assembly (4,22,41), the adjustable throttle pedal assembly (4,22,41)comprising a depressible throttle pedal (5,23,42), biased away from the depressed position, towards a rest position, and an electromagnetic brake (14, 34), operable to adjust the force required to depress the throttle pedal (5,23,42), **characterized in that** the electromagnetic brake (14,34) is adjustable to provide different customisable "pedal-weight" settings, to suit a driver's preferred force feedback.

2. An adjustable throttle pedal assembly (4,22,41) according to claim 1 wherein discrete pedal weight settings, are selectable, with a greater retarding force provided by the electromagnetic brake (14,34) to provide a firmer weight.

3. An adjustable throttle pedal assembly (4,22,41) according to any preceding claim wherein the pedal customisable pedal weight is calibrated to a given driver.

4. An adjustable throttle pedal assembly (4,22,41) according to any preceding claim wherein the electromagnetic brake (14,34) comprises a rotatable friction plate (16,36) coupled to the throttle pedal (5,23,42) and a static electromagnet (15,35) coupled to a mount (6,24,43) , whereby increasing the voltage applied to the electromagnet (15,35) increases the attraction between the friction plate (16,36) and the mount (6,24,43), and hence increases the force required to depress the throttle pedal (5,23,42) preferably wherein the friction plate (16,36) is mounted by means of a one-way bearing (18,38) so as to be rotatable in one direction, such that the electromagnetic brake (14,34) does not affect the force of the bias away from the depressed position.

5. An adjustable throttle pedal assembly (4,22,41) according to claim 4 wherein the rotatable friction plate (16,36) is separated from the static electromagnet (15,35) by an air gap.

6. An adjustable throttle pedal assembly (4,22,41) according to any preceding claim wherein the electromagnetic brake (14,34) is selected such that it has a maximum retarding force of less than a predetermined safety threshold of no more than twice the normal biasing force of the pedal (5,23,42) when the brake (14,34) is inactive.

7. An adjustable throttle pedal assembly (4,22,41) according to any preceding claim comprising a pedal-travel sensor (12,32) which is insensitive to electromagnetic interference.

8. An adjustable throttle pedal assembly (4,22,41) according to any preceding claim comprising a controller (21) operable to receive input signals and operable to output signals to the electromagnetic brake (14,34) in dependence on the input signals, optionally wherein the output signals are an output voltage selected so as to adjust the force required to depress the pedal (5,23,42).

9. An adjustable throttle pedal assembly (4,22,41) according to claim 8 wherein the input signals comprise inputs from the pedal-travel sensor (12,32) which determine the point of travel of the pedal (5,23,42) and are used to determine the necessary feedback; and/or user-selectable inputs, which represent an indication of desired pedal weight, whereby a higher output voltage will be provided for a heavier pedal weight signal; and/or wherein the controller (21) is capable of running a calibration setting, saving the result to memory and using the memorised result as an input, upon which the output voltage depends.

10. An adjustable throttle pedal assembly (4,22,41) according to claim 9 wherein to calibrate the pedal (5,23,42), in response to a signal to enter a calibration sequence, the controller (21) applies maximum resistive force to the electromagnetic brake (14,34); then gradually reduces the resistive force, and monitors the pedal travel sensor (12,32), until the pedal (5,23,42) begins to move, so as to determine the minimum amount of force required to balance the foot-force and prevent movement; wherein the controller (21) uses this minimum amount of force to select a customised pedal-weight setting.

11. An adjustable throttle pedal assembly (4) according to claim 4 or any claim dependent thereon, wherein the throttle pedal assembly (4) comprises a pendulum-mounted throttle pedal (5) connected to the mount (6) via an axle; the axle being irrotatably attached to the throttle pedal (5), but rotatable with respect to the mount (6); and attached to the friction plate (16) via the one-way (18) bearing; the electromagnet (15) of the electromagnetic brake (14) being irrotatably attached to the mount (6) so as to allow the friction plate (16) to rotate relative to the mount (6) in one direction when a depressive force is applied by a driver to the throttle pedal (5), such that if active, the electromagnetic brake (14) applies a resistive force, but to rotate relative to the throttle pedal (5) in the opposite direction when returning under the force of the bias away from the depressed position, so that the electromagnetic brake (14) does not affect recoil.

12. An adjustable throttle pedal assembly (22,41) according to claim 4 or any of claims 5-11 when dependent thereon, the throttle pedal assembly (22,41) comprising a floor mounted throttle pedal (23,42) and a linkage linking the step plate (25,44) to the mount (24,43); the biasing member (31,51) provided between the mount (24,43) and the step plate (25,44), so as to act directly on the step plate (25, 44), or between the mount (24,43) and the linkage, so as to act on the linkage and the linkage being mounted to an axle so as to rotate in the mount (24,43); the rotatable axle being attached to the friction plate (36) via the one-way bearing (38); the electromagnet (35) being irrotatably attached to the mount (24,43) so as allow the friction plate (36) to rotate relative to the mount (24,43) in one direction when a depressive force is applied by a driver to the throttle pedal (23,42), such that if active, the electromagnetic brake (34) applies a resistive force, but to rotate relative to the throttle pedal (23, 42) in the opposite direction when returning under the force of the bias away from the depressed position, so that the electromagnetic brake (34) does not affect recoil.

13. An adjustable throttle pedal assembly (4, 22, 41) according to claim 7 or any claim dependent thereon wherein the pedal travel sensor (12,32) comprises two portions, one mounted to the mount (6,24,43), the other mounted to throttle pedal (5, 23, 42) whereby relative movement between the two portions is monitored by the controller (21) to determine the extent of pedal travel.

14. A vehicle comprising the throttle pedal assembly (4, 22, 41) according to any preceding claim, preferably wherein the vehicle is a hybrid automobile (1) having an automatic transmission.

15. A throttle pedal controller (21) operable to receive input signals and output an electromagnetic brake control signal, in dependence on the input signals; the electromagnetic brake control signal being an output voltage selected so as to adjust the force required to depress a throttle pedal (5, 23, 42) of a throttle pedal assembly according to claims 1 to 13.

## Patentansprüche

1. Einstellbare Fahrpedalanordnung (4, 22, 41), wobei die einstellbare Fahrpedalanordnung (4, 22, 41) ein niederdrückbares Fahrpedal (5, 23, 42), das von der niedergedrückten Position weg in Richtung einer Ruheposition vorgespannt ist, und eine elektromagnetische Bremse (14, 34) umfasst, die betätigbar ist, um die Kraft einzustellen, die erforderlich ist, um das Fahrpedal (5, 23, 42) niederzudrücken, **dadurch gekennzeichnet,**
**dass** die elektromagnetische Bremse (14, 34) einstellbar ist, um verschiedene anpassbare "Pedalgewicht"-Einstellungen bereitzustellen, um der bevorzugten Kraftrückmeldung eines Fahrers zu entsprechen.

2. Einstellbare Fahrpedalanordnung (4, 22, 41) nach Anspruch 1, wobei diskrete Pedalgewichtseinstellungen wählbar sind, wobei eine größere Verzögerungskraft durch die elektromagnetische Bremse (14, 34) bereitgestellt wird, um ein festeres Gewicht bereitzustellen.

3. Einstellbare Fahrpedalanordnung (4, 22, 41) nach einem der vorhergehenden Ansprüche, wobei das Pedal-anpassbare Pedalgewicht auf einen bestimmten Fahrer kalibriert ist.

4. Einstellbare Fahrpedalanordnung (4, 22, 41) nach einem der vorhergehenden Ansprüche, wobei die elektromagnetische Bremse (14, 34) eine drehbare Reibungsplatte (16, 36), die mit dem Fahrpedal (5, 23, 42) gekoppelt ist, und einen statischen Elektromagneten (15, 35) umfasst, der mit einer Halterung (6, 24, 43) gekoppelt ist, wobei Erhöhen der an den Elektromagneten (15, 35) angelegten Spannung die Anziehung zwischen der Reibungsplatte (16, 36) und der Halterung (6, 24, 43) erhöht und somit die Kraft erhöht, die erforderlich ist, um das Fahrpedal (5, 23, 42) niederzudrücken, wobei vorzugsweise die Reibungsplatte (16, 36) mittels eines Freilauflagers (18, 38) derart montiert ist, dass sie in einer Richtung drehbar ist, so dass die elektromagnetische Bremse (14, 34) die Kraft der Vorspannung weg von der niedergedrückten Position nicht beeinflusst.

5. Einstellbare Fahrpedalanordnung (4, 22, 41) nach Anspruch 4, wobei die drehbare Reibungsplatte (16, 36) von dem statischen Elektromagneten (15, 35) durch einen Luftspalt separiert ist.

6. Einstellbare Fahrpedalanordnung (4, 22, 41) nach einem der vorhergehenden Ansprüche, wobei die elektromagnetische Bremse (14, 34) so ausgewählt ist, dass sie eine maximale Verzögerungskraft hat, die geringer ist als ein vorbestimmter Sicherheitsschwellenwert von nicht mehr als dem Doppelten der normalen Vorspannkraft des Pedals (5, 23, 42), wenn die Bremse (14, 34) inaktiv ist.

7. Einstellbare Fahrpedalanordnung (4, 22, 41) nach einem der vorhergehenden Ansprüche, die einen Pedalwegsensor (12, 32) umfasst, der unempfindlich gegenüber elektromagnetischer Interferenz ist.

8. Einstellbare Fahrpedalanordnung (4, 22, 41) nach einem der vorhergehenden Ansprüche, die ein Steuergerät (21) umfasst, das dazu betreibbar ist, Eingangssignale zu empfangen, und das dazu betreibbar ist, in Abhängigkeit von den Eingangssignalen Signale an die elektromagnetische Bremse (14, 34) auszugeben, wobei die Ausgangssignale optional eine Ausgangsspannung sind, die so gewählt ist, dass sie die Kraft einstellt, die erforderlich ist, um das Pedal (5, 23, 42) niederzudrücken.

9. Einstellbare Fahrpedalanordnung (4, 22, 41) nach Anspruch 8, wobei die Eingangssignale Eingaben von dem Pedalweg-Sensor (12, 32) umfassen, die den Punkt des Weges des Pedals (5, 23, 42) bestimmen und verwendet werden, um die notwendige Rückmeldung zu bestimmen; und/oder vom Benutzer auswählbare Eingaben, die eine Angabe des gewünschten Pedalgewichts darstellen, wobei eine höhere Ausgangsspannung für ein schwereres Pedalgewichtssignal bereitgestellt wird; und/oder wobei das Steuergerät (21) in der Lage ist, eine Kalibrierungseinstellung auszuführen, das Ergebnis im Speicher zu speichern und das gespeicherte Ergebnis als eine Eingabe zu verwenden, von der die Ausgangsspannung abhängt.

10. Einstellbare Fahrpedalanordnung (4, 22, 41) nach Anspruch 9, wobei zum Kalibrieren des Pedals (5, 23, 42) das Steuergerät (21) in Antwort auf ein Signal zum Eintritt in eine Kalibrierungssequenz maximale Widerstandskraft auf die elektromagnetische Bremse (14, 34) aufbringt; dann allmählich die Widerstandskraft reduziert und den Pedalwegsensor (12, 32) überwacht, bis das Pedal (5, 23, 42) sich zu bewegen beginnt, um so den minimalen Betrag der Kraft zu bestimmen, der erforderlich ist, um die Fußkraft auszugleichen und eine Bewegung zu verhindern; wobei das Steuergerät (21) diesen minimalen Betrag der Kraft verwendet, um eine angepasste Pedalgewichtseinstellung auszuwählen.

11. Einstellbare Fahrpedalanordnung (4) nach Anspruch 4 oder einem davon abhängigen Anspruch, wobei die Fahrpedalanordnung (4) ein pendelnd gelagertes Fahrpedal (5) umfasst, das mit der Halterung (6) über eine Achse verbunden ist; die Achse undrehbar an dem Fahrpedal (5) angebracht ist, jedoch in Bezug zu der Halterung (6) drehbar ist; und an der Reibungsplatte (16) über das Freilauflager (18) angebracht ist; der Elektromagnet (15) der elektromagnetischen Bremse (14) undrehbar an der Halterung (6) angebracht ist, um der Reibungsplatte (16) zu ermöglichen, sich relativ zu der Halterung (6) in einer Richtung zu drehen, wenn eine niederdrückende Kraft durch einen Fahrer auf das Fahrpedal (5) aufgebracht wird, so dass, wenn aktiv, die elektromagnetische Bremse (14) eine Widerstandskraft aufbringt, sich aber relativ zum Fahrpedal (5) in die entgegengesetzte Richtung dreht, wenn sie unter der Kraft der Vorspannung aus der niedergedrückten Position zurückkehrt, so dass die elektromagnetische Bremse (14) keinen Einfluss auf den Rückstoß hat.

12. Einstellbare Fahrpedalanordnung (22, 41) nach Anspruch 4 oder einem der Ansprüche 5 bis 11, wenn diese davon abhängen, wobei die Fahrpedalanordnung (22, 41) ein am Boden montiertes Fahrpedal (23, 42) und ein Gestänge umfasst, das die Trittplatte (25, 44) mit der Halterung (24, 43) verknüpft; wobei das Vorspannelement (31, 51) zwischen der Halterung (24, 43) und der Trittplatte (25, 44) bereitgestellt ist, um direkt auf die Trittplatte (25, 44) zu wirken, oder zwischen der Halterung (24, 43) und dem Gestänge, um auf das Gestänge zu wirken, und wobei das Gestänge an einer Achse derart montiert ist, dass es sich in der Halterung (24, 43) dreht; wobei die drehbare Achse über das Freilauflager (38) an der Reibungsplatte (36) angebracht ist; wobei der Elektromagnet (35) undrehbar an der Halterung (24, 43) derart angebracht ist, dass sich die Reibungsplatte (36) relativ zu der Halterung (24, 43) in einer Richtung drehen kann, wenn eine niederdrückende Kraft durch einen Fahrer auf das Fahrpedal (23, 42) aufgebracht wird, so dass, wenn aktiv, die elektromagnetische Bremse (34) eine Widerstandskraft aufbringt, sich aber relativ zum Fahrpedal (23, 42) in die entgegengesetzte Richtung dreht, wenn sie unter der Kraft der Vorspannung aus der niedergedrückten Position zurückkehrt, so dass die elektromagnetische Bremse (34) keinen Einfluss auf den Rückstoß hat.

13. Einstellbare Fahrpedalanordnung (4, 22, 41) nach Anspruch 7 oder einem davon abhängigen Anspruch, wobei der Pedalwegsensor (12, 32) zwei Bereiche umfasst, von denen einer an der Halterung (6, 24, 43) und der andere am Fahrpedal (5, 23, 42) montiert ist, wobei relative Bewegung zwischen den zwei Bereichen durch das Steuergerät (21) überwacht wird, um das Ausmaß des Pedalwegs zu bestimmen.

14. Fahrzeug, umfassend die Fahrpedalanordnung (4, 22, 41) nach einem der vorhergehenden Ansprüche, wobei das Fahrzeug vorzugsweise ein Hybridautomobil (1) mit einem Automatikgetriebe ist.

15. Steuergerät (21) für ein Fahrpedal, das dazu betreibbar ist, Eingangssignale zu empfangen und ein Steuersignal für eine elektromagnetische Bremse in Abhängigkeit von den Eingangssignalen auszugeben; wobei das Steuersignal für die elektromagnetische Bremse eine Ausgangsspannung ist, die so gewählt ist, dass sie die Kraft einstellt, die erforderlich ist, um ein Fahrpedal (5, 23, 42) einer Fahrpedalanordnung nach den Ansprüchen 1 bis 13 niederzudrücken.

## Revendications

1. Ensemble (4, 22, 41) réglable à pédale d'accélérateur, l'ensemble (4, 22, 41) réglable à pédale d'accélérateur comprenant une pédale (5, 23, 42) d'accélérateur, qui peut être abaissée et qui est sollicitée pour passer d'une position abaissée à une position de repos, et un frein (14, 34) électromagnétique pouvant fonctionner pour régler la force requise pour abaisser la pédale (5, 23, 42) d'accélérateur, **caractérisée en ce que**
le frein (14, 34) électromagnétique est réglable pour fournir des réglages « poids de pédale » pouvant être adaptés au client, pour s'adapter à une réaction de force préférée du conducteur.

2. Ensemble (4, 22, 41) réglable à pédale d'accélérateur suivant la revendication 1, dans lequel des réglages de poids de pédale discrets peuvent être sélectionnés en ayant une force de retard plus grande donnée par le frein (14,34) électromagnétique pour donner un poids plus ferme.

3. Ensemble (4, 22, 41) réglable à pédale d'accélérateur suivant n'importe quelle revendication précédente, dans lequel le poids de pédale pouvant être adapté au client est étalonné à un conducteur donné.

4. Ensemble (4, 22, 41) réglable à pédale d'accélérateur suivant n'importe quelle revendication précédente, dans lequel le frein (14, 34) électromagnétique comprend une plaque (16, 36) de friction pouvant tourner accouplée à la pédale (5, 23, 42) d'accélérateur et un électroaimant (15, 35) statique accouplé à une monture (6, 24, 43), dans lequel augmenter la tension appliquée à l'électroaimant (15, 35) augmente l'attraction entre la plaque (16, 36) de friction et la monture (6, 24, 43) et ainsi augmente la force requise pour abaisser la pédale (5, 23, 42) d'accélération, dans lequel, de préférence, la plaque (16, 36) de friction est montée au moyen d'un palier (18, 38) unidirectionnel, de manière à pouvoir tourner dans un sens, de sorte que le frein (14, 34) électromagnétique n'affecte pas la force de la sollicitation tendant à l'éloigner de la position abaissée.

5. Ensemble (4, 22, 41) réglable à pédale d'accélérateur suivant la revendication 4, dans lequel la plaque (16, 36) de friction pouvant tourner est séparée de l'électroaimant (15, 35) statique par un entrefer.

6. Ensemble (4, 22, 41) réglable à pédale d'accélérateur suivant n'importe quelle revendication précédente, dans lequel le frein (14,34) est choisi de manière à avoir une force de retard maximum de moins qu'un seuil de sécurité déterminé à l'avance de pas plus de deux fois la force de sollicitation normale de la pédale (5, 23, 42), lorsque le frein (14, 34) est inactif.

7. Ensemble (4, 22, 41) réglable à pédale d'accélérateur suivant n'importe quelle revendication précédente, comprenant un capteur (12, 32) de course de pédale, qui est insensible à une interférence électromagnétique.

8. Ensemble (4, 22, 41) réglable à pédale d'accélérateur suivant n'importe quelle revendication précédente, comprenant une unité (21) de commande pouvant fonctionner pour recevoir des signaux d'entrée et pouvant fonctionner pour envoyer des signaux au frein (14, 34) électromagnétique en fonction des signaux d'entrée, dans lequel éventuellement les signaux de sortie sont une tension de sortie choisie de manière à régler la force requise pour abaisser la pédale (5, 23, 42).

9. Ensemble (4, 22, 41) réglable à pédale d'accélérateur suivant la revendication 8, dans lequel les signaux d'entrée comprennent des entrées du capteur (12, 32) de course de pédale, qui déterminent le point de la course de la pédale (5, 23, 42), et qui sont utilisés pour déterminer la réaction nécessaire ; et/ou des entrées pouvant être sélectionnées par un utilisateur, qui représentent une indication d'un poids de pédale souhaité, dans lequel une tension de sortie plus haute sera donnée pour un signal de poids de pédale plus lourd ; et/ou dans lequel l'unité (21) de commande est apte à effectuer un réglage d'étalonnage, à sauvegarder les résultats dans une mémoire et à utiliser le résultat en mémoire comme une entrée, dont dépend la tension de sortie.

10. Ensemble (4, 22, 41) réglable à pédale d'accélérateur suivant la revendication 9, dans lequel, pour étalonner la pédale (5, 23, 42) en réaction à un signal d'entrée dans une séquence d'étalonnage, l'unité (21) de commande applique une force résistante maximum au frein (14, 34) électromagnétique ; puis réduit graduellement la force résistante et contrôle le capteur (12, 32) de course de pédale, jusqu'à ce que la pédale (5, 23, 42) commence à se déplacer, de manière à déterminer la quantité minimum de force requise pour équilibrer la force au pied et empêcher un déplacement ; dans lequel l'unité (21) de commande utilise cette quantité minimum de force pour choisir un réglage de poids de pédale en fonction du client.

11. Ensemble (4) réglable à pédale d'accélérateur suivant la revendication 4 ou n'importe quelle revendication qui en dépend, dans lequel l'ensemble (4) à pédale d'accélérateur comprend une pédale (5) d'accélérateur à montage pendulaire reliée à la monture (6) par l'intermédiaire d'un axe ; l'axe étant fixé sans possibilité de tourner à la pédale (5) d'accélérateur, mais pouvant tourner par rapport à la monture (6) ; et étant fixé à la plaque (16) de friction par l'intermédiaire du palier (18) unidirectionnel, l'électroaimant (15) du frein (14) électromagnétique étant fixé sans possibilité de tourner à la monture (6), de manière à permettre à la plaque (16) de friction de tourner par rapport à la monture (6) dans un sens, lorsqu'une force d'abaissement est appliquée par un conducteur à la pédale (5) d'accélérateur, de manière à ce que, s'il est actif, le frein (14) électromagnétique applique une force résistante, mais de manière à tourner par rapport à la pédale (5) d'accélération dans le sens contraire, lors du retour sous l'effet de la force de la sollicitation éloignant de la position abaissée, de sorte que le frein (14) électromagnétique n'affecte pas un recul.

12. Ensemble (22, 41) réglable à pédale d'accélérateur suivant la revendication 4 ou n'importe laquelle des revendications 5 à 11 qui en dépend, l'ensemble (22, 41) à pédale d'accélérateur, comprenant une pédale (23, 42) d'accélérateur montée sur plancher et une liaison reliant la plaque (25, 44) à gradins à la monture (24, 43) ; l'élément (31, 51) de sollicitation étant prévu entre la monture (24, 43) et la plaque (25, 44) à gradins, de manière à agir directement sur la plaque (25, 44) à gradins ou entre la monture (24, 43) et la liaison, de manière à agir sur la liaison et la liaison étant montée sur un axe, de manière à tourner dans la monture (24, 43) ; l'axe pouvant tourner étant fixé à la plaque (36) de friction, par l'intermédiaire du palier (38) unidirectionnel ; l'électroaimant (35) étant fixé sans pouvoir tourner à la monture (24, 43), de manière de permettre à la plaque (36) de friction de tourner par rapport à la monture (24, 43) dans un sens, lorsqu'une force d'abaissement est appliqué par un conducteur à la pédale (23, 42) d'accélérateur, de manière à ce que, s'il est actif, le frein (34) électromagnétique applique une force résistante, mais de tourner par rapport à la pédale (23, 42) d'accélérateur dans le sens contraire, lors d'un retour sous l'effet de la force de la sollicitation tendant à l'éloigner de la position abaissée, de sorte que le frein (34) électromagnétique n'affecte pas un recul.

13. Ensemble (4, 22, 41) réglable à pédale d'accélérateur suivant la revendication 7 ou n'importe laquelle qui en dépend, dans lequel le capteur (12, 32) de course de pédale comprend deux parties, l'une montée sur la monture (6, 24, 43), l'autre montée sur la pédale (5, 23, 42) d'accélérateur, un mouvement relatif entre les deux parties étant contrôlé par l'unité (21) de commande pour déterminer l'étendue de la course de la pédale.

14. Véhicule comprenant l'ensemble (4, 22, 41) à pédale d'accélérateur suivant l'une quelconque des revendications précédentes, dans lequel, de préférence, le véhicule est une automobile (1) hybride ayant une transmission automatique.

15. Unité (21) de commande de la pédale d'accélérateur pouvant fonctionner pour recevoir des signaux d'entrée et sortir un signal de commande d'un frein électromagnétique en fonction des signaux d'entrée ; le signal de commande d'un frein électromagnétique étant une tension de sortie choisie de manière à régler la force requise pour abaisser la pédale (5, 23, 42) d'accélérateur d'un ensemble à pédale d'accélérateur suivant les revendications 1 à 13.
